# EUROPEAN PATENT APPLICATION

(11) **EP 3 404 876 A1**
(43) Date of publication of application: **21.11.2018**
(21) Application number: 17305552.6
(22) Date of filing: 15.05.2017
(51) Int. Cl.: H04L 12/721, H04L 12/715

(54) **SYSTEM AND METHOD FOR ENFORCING IP ROUTING POLICIES AT OPTICAL SWITCHING LEVEL**

(71) Applicant: Nokia Solutions and Networks Oy, 02610 Espoo (FI)
(72) Inventor: BETGE-BREZETZ, Stéphane, 91620 Nozay (FR); VERCHERE, Dominique, 91620 Nozay (FR)
(74) Representative: Loyer & Abello

(57) **Abstract**

A system and method are provided of translating and enforcing an IP Policy Rule at optical switching level, in a software defined network equipped with a SDN controller, comprising :
- an IP network comprising a Source Router and a destination Router; and
- an optical network serving the IP network and comprising a plurality of Optical Switches, of which a Source Optical Switch and a Destination Optical Switch, with the Optical Switches being interconnected by a plurality of Optical Links on which may circulate L0 flows.

The IP Policy Rule aggregates a set of policy conditions with a set of policy actions applying to an L3 flow between the Source Router and the destination Router. The IP Policy Rule is received at an IP to Optic Policy Translator configured to translate the policy conditions and actions defined in the IP Policy Rule into policy conditions and actions to control the Optical Switches. Policy conditions and actions to control the Optical Switches take the form of communication of Source Router, Destination Router, Policy Rule and Aggregation Options received at an Optical Policy Enforcer configured to test whether at least one L0 flow is defined in a Network Topology Database associated with the SDN controller, through the Optical Switches and the Optical Links, that allows connecting the Source Router and the destination Router, and satisfies the IP Policy Rule; and, in the negative to compute alternate L0 flows through the Optical Switches and the Optical Links that allow connecting the Source Optical Switch and the Destination Optical Switch, and satisfy the IP Policy Rule.

## Description

### Field of the invention

The invention relates to the technical field of systems and methods for ensuring that policies defined at routing level (L3/L2) be enforced at the underlying optical switching level (L1/L0).

### Background

Routing policies in a network e.g. : regulatory policies, may be defined such that data, in particular sensitive ones, do not cross a network infrastructure domain. For example, a policy may state that sensitive data must not cross a given network area or country. Other policies may state that the optical path underlying the network must not cross unsecured switching nodes, or risky service providers.

Implementations exist based on policy enforcement at the IP switching layer. Some of these works rely on pure path computation and route exclusions based on IETF Path Computation Element, see for example IETF RFC 5521, April 2009, "Extensions to the Path Computation Element Communication Protocol (PCEP) for Route Exclusions", by E. Oki, T. Takeda, and A. Farrel.

Other existing approaches are based on path computing application executed by a Software Defined Network (SDN) controller, see for example European Patent Application EP2999172 published March 23, 2016, « Method and devices to certify a trusted path in a software defined network », by S.Betge-Brezetz, and G-B Kamga.

Nevertheless, in these approaches, policies are enforced through the control of IP flows, not through the control of optical connections serving the IP flows. They are therefore not sufficient for IP over optical networks as enforcing these constraints only in the control of the IP switching layer does not guarantee that these constraints are also enforced in the control of the underlying optical network connections which can be configured to enable routing adjacency between two IP routers. If sensitive IP data flows (e.g., government data, eHealth data, business data), the data are then at risk when transported along the optical connections. For example, certain constraints of path routing to exclude geographical zones may be enforced in the control of the IP switching network without however any assurance that optical switching network is also excluding the geographical zones at risk. Hence IP data flows transported over optical connections could be jammed by ROADM control intrusion, eavesdropped through fiber bending, intercepted at these geographical zones, etc.

The optical connection topology configured in the underlying transport network may be different from the IP connection topology configured at the client data transport network. For example, several optical nodes (OXC, ROADM, etc.) may be configured to interconnect a couple of IP nodes (routers, switches, etc.). As the optical network connection used by the IP data flows is configured at the optical switching layer e.g., L0 switching (Lambda Switch Capable network) or L1 switching (TDM Switch Capable network), the policies must then be enforced down to the optical network switching layer (L0/L1) and must be verified along the optical connections.

The openness of SDN/NFV based controlled multilayer network (e.g., IP over WDM networks) makes even more critical the enforcements and the verifications of such policies into optical network connections.

Today there is no solution to infer policies from the IP switching network client to enforce the required optical network policies to guarantee that data, particularly sensitive ones (e.g., as requested by applications) will be transported securely end-to-end on optical network connections.

### Summary

The invention provides for a system and method for enforcing IP routing policies at optical switching level.

An optical network is usually serving a packet switched network such as an IP network. This multi-layer network infrastructure may be controlled with a network controller for packet switched capable nodes (e.g., IP routers, Ethernet switches) and a network controller for wavelength switched capable nodes.

From a network controller set for any future optical networks (e.g., elastic optical network), the «rule-action-statistic» principle is extended to enforce the constraints inferred from the control of IP data flows to configure each optical flow at the L0 switching layer and/or L1 switching layer.

Each IP network operation rule is analyzed to infer optical network operation rules enabling to enforce the constraints during the setting and/or the control of the optical flow, i.e. : L0 flow (e.g. : nominal central frequency, frequency slot) or L1 flow (e.g. : tributary port number, tributary slots, etc.) to guarantee the continuum of the policy rule.

The invention provides a system and method to translate the security/trust policy rule defined at the IP/Ethernet layer as the rules of the optical flow, and to enforce these rules as the configurations (e.g., through flow tables) of the optical switches traversed by the optical flow.

More particularly, the invention comprises a method of translating and enforcing an IP Policy Rule at optical switching level, in a software defined network equipped with a SDN controller, comprising :
- an IP network on which may circulate L3/L2 flows, comprising a Source Router and a Destination Router; and
- an optical network serving the IP network and comprising a plurality of Optical Switches, of which a Source Optical Switch attached to the Source Router, and a Destination Optical Switch attached to the Destination Router, said Optical Switches being interconnected by a plurality of Optical Links on which may circulate L1/L0 flows;
said IP Policy Rule aggregating a set of policy conditions with a set of policy actions applying to an L3/L2 flow between the Source Router and the destination Router;
said method comprising the steps of :
- receiving the IP Policy Rule including information of Source Router, Destination Router and Aggregation Options, at an IP to Optic Policy Translator;
- translating the policy conditions and actions defined in the IP Policy Rule, into a Switch Policy Rule aggregating a set of policy conditions with a set of policy actions applying to L1/L0 flows between Optical Switches ;
- receiving the Switch Policy Rule at an Optical Policy Enforcer;
- testing whether at least one L1/L0 flow is defined in a Network Topology Database associated with the SDN controller, through the optical network that allows connecting the Source Optical Switch and the Destination Optical Switch, and that satisfies the Switch Policy Rule; and, in the negative
- computing alternate L1/L0 flows through the optical network that allow connecting the Source Optical Switch and the Destination Optical Switch, and that satisfy the Switch Policy Rule.

In one embodiment, the step of computing alternate L1/L0 flows further comprises the steps of:
- testing whether the Aggregation Options were selected; and, in the affirmative
- computing at least two alternate L1/L0 flows through the optical network that allow connecting Source Optical Switch to at least one Intermediary Optical Switch, each such Intermediary Optical Switch being attached to an Intermediary Router, and that satisfy the Switch Policy Rule.

In another embodiment, the method further comprises the steps of:
- monitoring data flows nested in the L1/L0 flows; and, if the data flows are sensitive
- checking that security requirements for the data flows are compliant with the Switch Policy Rule.

In yet another embodiment, the method further comprises the steps of:
- detecting security threats affecting the Optical Links; and, if any is detected, and if any L1/L0 flow circulates on such an affected Optical Link
- requesting to the SDN Controller, for any such L1/L0 flow circulating on an affected Optical Link, a different L1/L0 flow that satisfies the Switch Policy Rule.

In yet another embodiment, the method further comprises the steps of:
- detecting security threats affecting the Optical Switches; and, if any is detected, and if any L1/L0 flow circulates through such an affected Optical Switch
- requesting to the SDN Controller, for any such L1/L0 flow circulating through an affected Optical Switch, a different L1/L0 flow that satisfies the Switch Policy Rule.

In yet another embodiment, the method further comprises the steps of signing and certifying the IP Policy Rule.

The invention also comprises a system of translating and enforcing an IP Policy Rule (10) at optical switching level, in a software defined network equipped with a SDN controller, where such network comprises:
- an IP network on which may circulate L3/L2 flows, comprising a Source Router and a Destination Router; and
- an optical network serving the IP network and comprising a plurality of Optical Switches, of which a Source Optical Switch attached to the Source Router, and a Destination Optical Switch attached to the Destination Router, said Optical Switches being interconnected by a plurality of Optical Links on which may circulate L1/L0 flows;
and where said IP Policy Rule aggregates a set of policy conditions with a set of policy actions applying to an L3/L2 flow between the Source Router and the destination Router; said system comprising:
- an IP to Optic Policy Translator configured to:
   - receive the IP Policy Rule;
   - translate the IP Policy Rule into a Switch Policy Rule aggregating a set of policy conditions with a set of policy actions applying to L1/L0 flows between Optical Switches; and
   - store the Switch Policy Rule into a Rule Database;
- an Optical Policy Enforcer configured to:
   - receive the Switch Policy Rule;
   - test whether at least one L1/L0 flow is defined in a Network Topology Database associated with the SDN controller, through the optical network that allows connecting the Source Optical Switch and the Destination Optical Switch, and that satisfies the Switch Policy Rule; and, in the negative
   - compute alternate L1/L0 flows through the optical network that allow connecting the Source Optical Switch and the Destination Optical Switch, and that satisfy the Switch Policy Rule.

In an embodiment, the system further comprises an Optical Network Policy Checker configured to:
- monitor data flows nested in the L1/L0 flows; and, if the data flows are sensitive
- check that security requirements for the data flows are compliant with the Switch Policy Rule.

In another embodiment, the Optical Network Policy Checker is further configured to:
- detect security threats affecting the Optical Links; and, if any is detected, and if any L1/L0 flow circulates on such an affected Optical Link
- request to the SDN Controller, for any such L1/L0 flow circulating on an affected Optical Link, a different L1/L0 flow that satisfies the Switch Policy Rule.

In yet another embodiment, the Optical Network Policy Checker is further configured to:
- detect security threats affecting the Optical Switches; and, if any is detected, and if any L1/L0 flow circulates through such an affected Optical Switch
- request to the SDN Controller, for any such L1/L0 flow circulating through an affected Optical Switch, a different L1/L0 flow that satisfies the Switch Policy Rule.

### Brief description of the drawings

These and other aspects of the invention will be apparent from and elucidated with reference to the embodiments described hereinafter, by way of examples, with reference to the drawings.
Figure 1 is a high level view of the various components and information flows between them.
Figure 2 describes the steps of decision making process within an optic policy enforcer.
Figure 3 illustrates two routers connected through an SDN controlled optical network,with underlying optical switches.
Figure 4 illustrates a first case of resolving optical switches and links not meeting policy rules.
Figure 5 illustrates a second case of resolving optical switches and links not meeting policy rules.
Figure 6 illustrates a third case of resolving optical switches and links not meeting policy rules.
Figure 7 illustrates a case of resolving an attack being detected on an optical link.
Figure 8 describes the steps of decision making process within an optical policy enforcer in case of detection of a security attack on an optical link and/or an optical switch.

### Detailed description of the embodiments

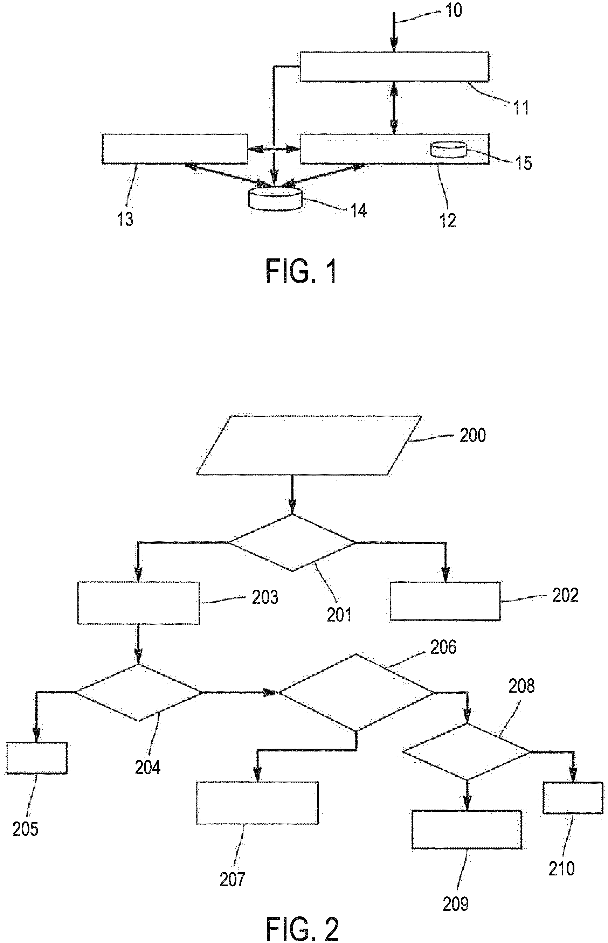

Figure 1 is a high level view of the various components and information flows between them according to the invention.

An IP Policy Rule 10 defined for the IP switched network is fed into an IP to Optic Policy Translator 11.

IP Policy Rule 10 is a container that aggregates a set of policy conditions with a set of policy actions. It is structured in 3 parts: (i) metadata defining the overall behavior and function of IP Policy Rule 10, (ii) boolean condition clause, and (iii) action clause to enforce the policy into the control of the connections.

Examples of actions in the IP switched network that IP Policy Rule 10 may enforce comprise:
- imposing/avoiding certain given geographical areas;
- imposing/avoiding certain given links (e.g., transatlantic links);
- imposing/avoiding certain equipment made by certain vendors;
- imposing/avoiding an optical link or an optical switch for which a threat has been detected (e.g. optical fiber intrusion); or
- avoiding to share the identified traffic on links with certain given customers (e.g., customers of similar business).

The following will assume, without limitation to the scope of the invention which extends beyond the described embodiment, for the IP switched network that the data flow is considered to include a a unidirectional L3 or L2 flow, and that the optical flow is considered to include a unidirectional L1 or L0 flow, such as for example specified in : Open Networking Foundation, TR-522, March 15, 2016, « SDN Architecture for Transport Networks». The following description is made in relation to L3/L0 flows, but the same principles apply for L3/L1, L2/L0 and L2/L1 flows.

IP to Optic Policy Translator 11 is a component that translates/adapts the policy rules defined and stored for the control of IP network, into the policy rules as a Switch Policy Rule to control the underlying optical network, and to store them. It stores the inferred policy rules into a Rule Database 14.
For example, it can get the geographical location (e.g., country) information from the control agents of the optical network equipment. It can get also this information from a network inventory data base associated to the the optical network control.
Storing the necessary information at the optical network control layer can also be used for the embodiment of the solution of this invention.
Also, to get more security assurance, this information may also be stored in hardware-based secure element embedded within the optical switch. The hardware-based secure element uniquely identifies the optical system element.

At the IP network control, the IP Policy Rule 10 is created by an IP network trusted path enforcer.

Optical Policy Enforcer 12 sets up an L0 flow allowing to satisfy the Switch policy rule. It comprises a Network Topology Database 15. This component can reconfigure an L0 flow if associated policy rules are no more respected (e.g., intrusion detected in an open ROADM, in a fiber). This module can be implemented as an SDN application handling the Rule Database 14 associated to a SDN controller of the optical network.
Hereafter, it is considered that such an SDN controller has the Optical extended OpenFlow protocol plugin to configure the different optical switches.

Optical Policy Enforcer 12 may also enrich a policy rule translated to be enforced into the optical networks to include IP over optical network specific parameters, as for example the IP over Optical connection Aggregation options (each associated with an aggregation decision Boolean value YES or NO).

Optical Policy Enforcer 12 may also be made tamper-proof (e.g.: using root of trust approach) to prevent attacks aimed at it.

In addition, IP Policy Rule 10 may also be signed, and certification mechanisms be integrated to allow the IP network controller to have assurance that IP Policy Rule 10 has actually been implemented by Optical Policy Enforcer 12.

Optical Network Policy Checker 13 provides assurance that the action clause of the policy rule is executed. This component performs monitoring of the data traffic flows nested in the L0 flows to detect whether the traffic is sensitive, and to check that the data traffic security requirement is compliant with the corresponding optical network policy rule. It is also in charge of detecting any threat event in the optical network (e.g., data intrusion in the fiber, control intrusion in the ROADM).
Optical Network Policy Checker 13 also allows to request another trusted L0 flow to the SDN controller, which will be enforced by Optical Policy Enforcer 12.

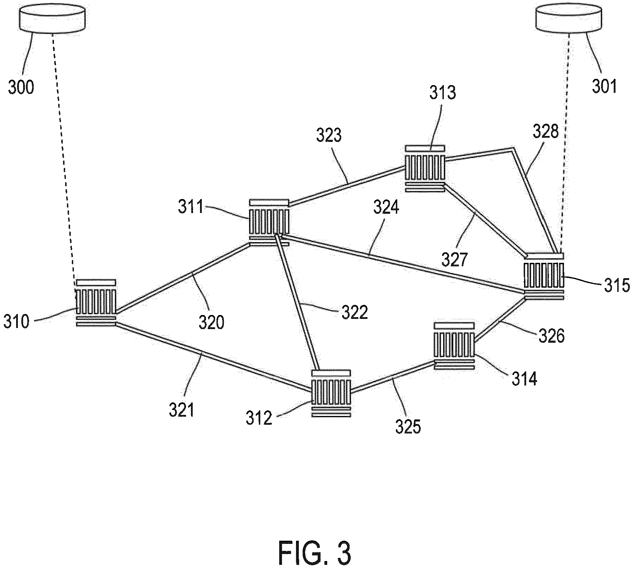

Figure 3 illustrates two routers connected through an SDN controlled optical network, with underlying optical switches. Source Router 300 is connected to Destination Router 301 through at least one L3 flow. The underlying optical network is composed of Optical Switches 310-315 which may be interconnected via Optical Links 320-328. L0 flows may circulate through one or more of the Optical Switches and Optical Links.

Figure 2 describes the steps of decision making process within Optical Policy Enforcer 12. The following will assume, without limitation to the scope of the invention which extends beyond the described embodiment, that Optical Policy Enforcer 12 operates as an SDN application when a given policy rule is enforced.

At step 200, an incoming trusted optical connection request specifies Source Router 300 and Destination Router 301, IP Policy Rule 10, and one or several Aggregation Options.
At step 201, a test is made whether there is at least one L0 flow that both (i) can be set in the different flow tables of the Optical Switches 310-315 allowing to configure the optical switching from the Source Router 300 to the Destination Router 301, and (ii) allows to satisfy the IP Policy Rule 10.
For this purpose, Optical Policy Enforcer 12 relies on Network Topology Database 15.

If the step 201 test is positive, at step 202, the Source Router 300 is instructed to use the identifed L0 flow. The SDN controller sends the corresponding OpenFlow port modification message (OF message type OFPT_PORT_MOD) to modify the central frequency and frequency slot width (optical port configurations set to use frequency: OFPOPF_USE_FREQ) of the transmitter port at the source optical switch and the corresponding receiver port at the destination optical switch.

If the step 201 test is negative, it means that no L0 flow may be configured to nest a L3 flow connecting Source Router 300 to Destination Router 301. At step 203, different L0 flows (as L0 flow_i) are then computed that both (i) can be set in the different flow tables of the Optical Switches 310-315 allowing to configure the optical switching from the Source Router 300 to the Destination Router 301, and (ii) the aggregation of which allows to satisfy the IP Policy Rule 10.

At step 204, a test is made whether there is at least one possible such aggregation of L0 flow_i.

If the step 204 test is negative, at step 205 a negative response is sent back to the controller of the IP network (no trusted optical connection i.e., L0 flow, may be found or established satisfying the condition clause of the policy rule).

If the step 204 test is positive, i.e. : a succession of L0 flows are already configured, or may be configured allowing one or several L3 flows to connect Source Router 300 to Destination Router 301, at step 206 a test is made whether the Aggregation Options were selected, i.e. : whether aggregation at intermediate routers is allowed.

If the step 206 test is positive, at step 207 the traffic is redirected to an intermediary router attached to an Optical Switch capable of switching from L0 flow_i to L0 ftow_i+1. What is returned is the instruction to use L0 flow_1 from Source Router 300 to the intermediary router, and L0 flow_2 from the intermediary router to Destination Router 301.

If the step 206 test is negative, i.e. : L3 flow aggregation cannot be performed at the IP network, at step 208 a test is made whether L0 flow switching is authorized i.e., at this step if L0 flow can be established allowing to satisfy the IP Policy Rule 10.

If the step 208 test is positive, at step 209 it is returned to Source Router 300 to use L0 flow, i.e.,: an L0 flow switching is performed at Optical Switches 310-315 between Source Router 300 and Destination Router 301.

If the step 208 test is negative, at step 210 it is returned that no optical path satisfying the policy is possible. The system may also provide the reason (e.g., the results of the tests) so that the user can modify his policy accordingly to obtain a compliant optical path.

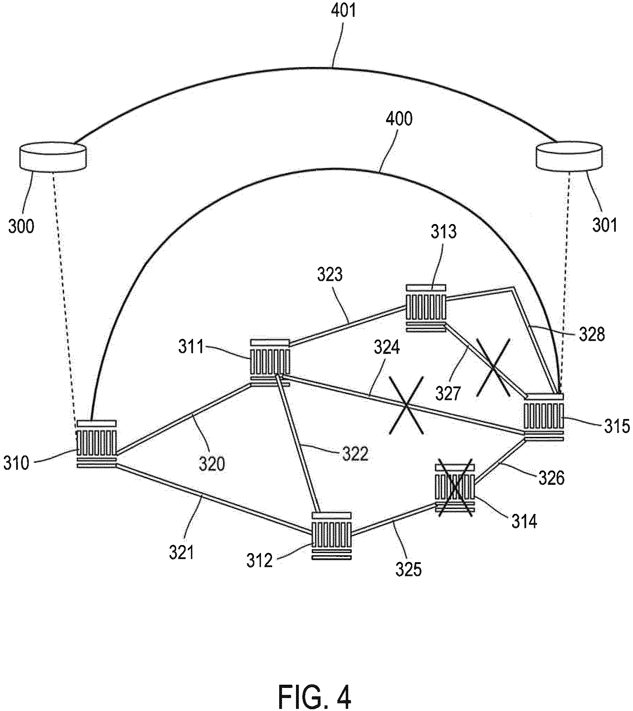

Figure 4 illustrates a first case of resolving optical switches and links not meeting policy rules.
As an example, Optical Switch 314 and Optical Links 324 and 327 do not allow to meet IP Policy Rule 10.
Corresponding to L3 flow 401, a L0 flow 400 is established by Optical Policy Enforcer 12 between Optical Switches 310 and 315, through Optical Switches 311 and 313, and Optical Links 320, 323, and 328, that allow to meet IP Policy Rule 10.

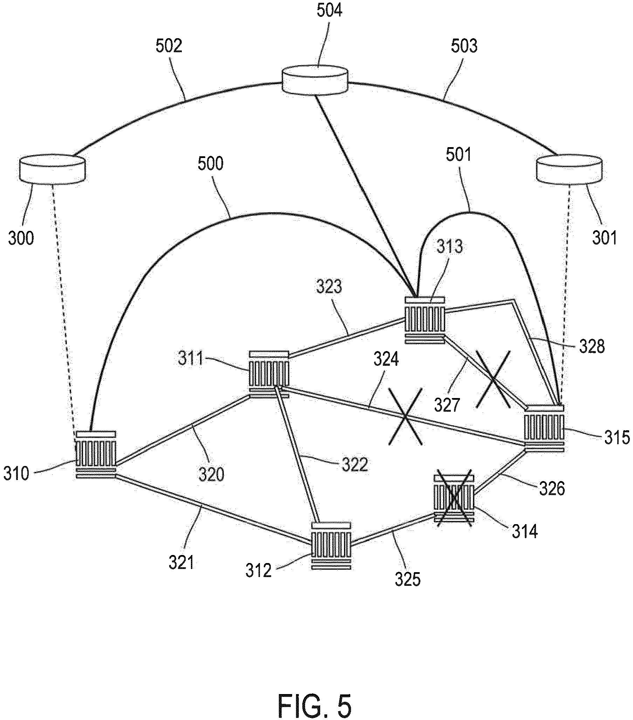

Figure 5 illustrates a second case of resolving optical switches and links not meeting policy rules.
As an example, Optical Switch 314 and Optical Links 324 and 327 do not allow to meet IP Policy Rule 10.
Two L0 flows 500 and 501 are set by the SDN controller, allowing to connect Source Router 300 to Destination Router 301 with two L3 flows 502 and 503, through an Intermediary Router 504.
L0 flow 500 is established between Optical Switches 310 and 313, through Optical Switch 311, and Optical Links 320 and 323.
L0 flow 501 is established between Optical Switches 313 and 315, through Optical Link 328.
Intermediary Router 504 can thus take advantage of this to aggregate and transport some data traffic to be nested in L0 flow 501. This allows satisfying the condition clause of the policy rule for the initial sensitive traffic while also optimizing the usage of the optical resources e.g., optical ports, optical frequency, tributary slots, or others.

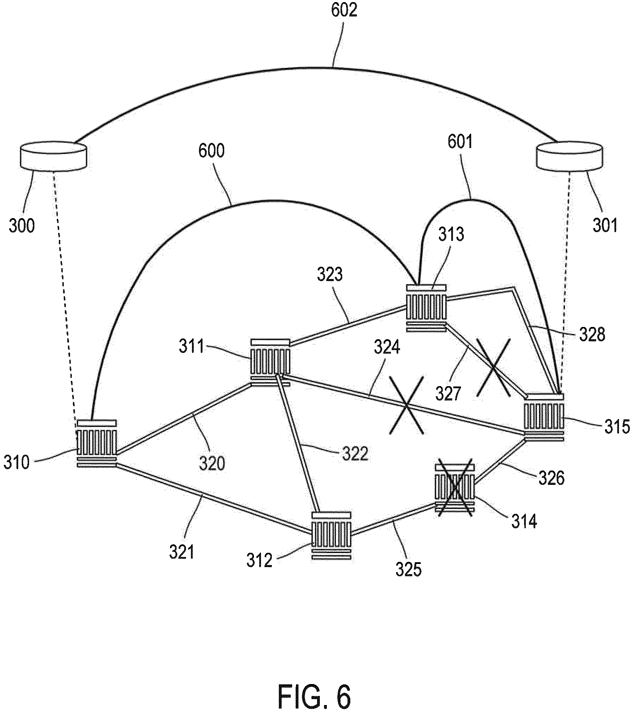

Figure 6 illustrates a third case of resolving optical switches and links not meeting policy rules.
Configurations to the flow table from the optical SDN controller are performed with the OpenFlow Flow Modification message (type OFPT_FLOW_MOD message): L0 switching is performed between L0 flows 600 and 601 corresponding to L3 flow 602.
L0 flow 600 is established by Optical Policy Enforcer 12 between Optical Switches 310 and 313, through Optical Switch 311, and Optical Links 320 and 323.
L0 flow 601 is established by Optical Policy Enforcer 12 between Optical Switches 313 and 315, through Optical Link 328.

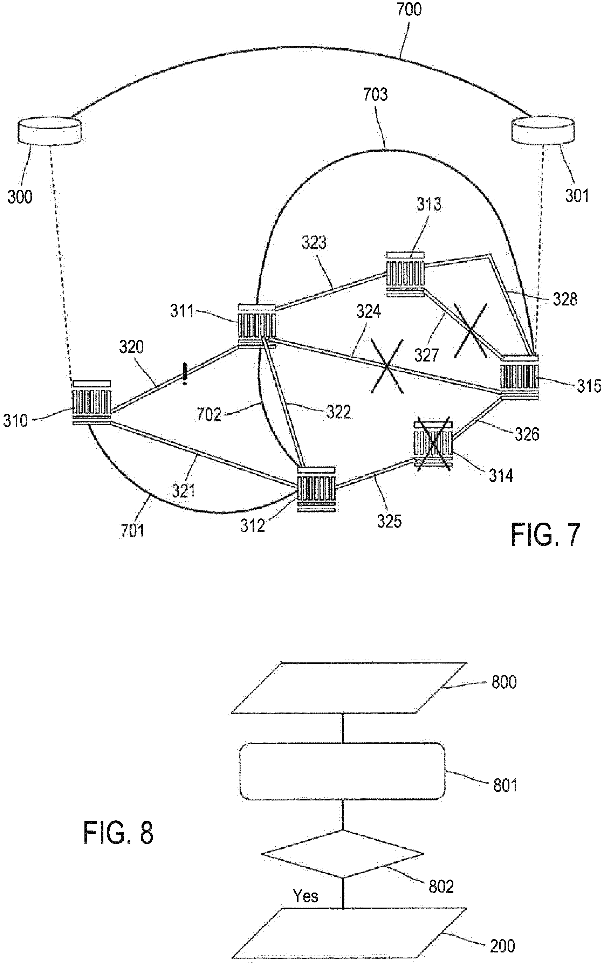

Figure 7 illustrates a case of resolving an attack being detected on an optical connection. This can for example result from optical system intrusion actions, such as "fiber bending" or ROADM intrusion.
As an example, Optical Switch 314 and Optical Links 324 and 327 do not allow to meet IP Policy Rule 10, and a security attack is being detected on Optical Link 320.
The action clause of translated IP Policy Rule 10 sets Optical Link 320 as untrusted.
A reconfiguration of the underlying L0 flows for L3 flow 700 is initiated by Optical Policy Enforcer 12, resulting in establishing L0 flow 701 between Optical Switches 310 and 312, L0 flow 702 between Optical Switches 312 and 311, and L0 flow 703 between Optical Switches 311 and 315.

Figure 8 describes the steps of decision making process within Optical Policy Enforcer 12 in case of detection of a security attack or threat on an optical link and/or an optical switch.
At step 800, a security attack is being detected on an optical system e.g. an optical link, the interface of optical switch, the optical switch itself, an open ROADM, etc., in the optical network underlying the L0 flow between Source Router 300 and Destination Router 301. At step 801, a verification is processed to identify which are the L0 flows using the attacked optical system.
Then at step 802, each such identified L0 flow configured on the optical network and described in the Network Topology Database 15 is checked whether it is being affected by the security attack. If it is, a new optical connection is requested to the Optical Policy Enforcer 12 at step 200, and steps 200 and following according to Figure 2 are being repeated.
These reconfigurations of L0 flows is also performed according to the policies of the optical network operator.

Elements such as IP to Optic Policy Translator 11, Optical Policy Enforcer 12 and Optical Network Policy Checker 13, could each be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modifications and alternative constructions that may occur to one skilled in the art, and which fairly fall within the basic teaching as set forth herein.

The use of the verb "to comprise", "to include" or "to contain" and their conjugations does not exclude the presence of elements or steps other than those stated in a claim.
Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method of translating and enforcing an IP Policy Rule (10) at optical switching level, in a software defined network equipped with a SDN controller, comprising :
- an IP network on which may circulate L3/L2 flows, comprising a Source Router (300) and a Destination Router (301); and
- an optical network serving the IP network and comprising a plurality of Optical Switches (310 -315), of which a Source Optical Switch (310) attached to the Source Router (300), and a Destination Optical Switch (315) attached to the Destination Router (301), said Optical Switches being interconnected by a plurality of Optical Links (320 - 328) on which may circulate L1/L0 flows;
said IP Policy Rule (10) aggregating a set of policy conditions with a set of policy actions applying to an L3/L2 flow between the Source Router (300) and the destination Router (301) ;
said method comprising the steps of:
- receiving the IP Policy Rule (10) at an IP to Optic Policy Translator (11);
- translating the policy conditions and actions defined in the IP Policy Rule (10), into a Switch Policy Rule aggregating a set of policy conditions with a set of policy actions applying to L1/L0 flows between Optical Switches (310-315) ;
- receiving the Switch Policy Rule at an Optical Policy Enforcer (12);
- testing whether at least one L1/L0 flow is defined in a Network Topology Database (15) associated with the SDN controller, through the optical network that allows connecting the Source Optical Switch (310) and the Destination Optical Switch (315), and that satisfies the Switch Policy Rule; and, in the negative
- computing alternate L1/L0 flows through the optical network that allow connecting the Source Optical Switch (310) and the Destination Optical Switch (315), and that satisfy the Switch Policy Rule.

2. The method of claim 1, wherein the step of computing alternate L1/L0 flows further comprises the steps of:
- testing whether Aggregation Options were selected in the IP Policy Rule (10); and, in the affirmative
- computing at least two alternate L1/L0 flows through the optical network that allow connecting Source Optical Switch (310) to at least one Intermediary Optical Switch (313), each such Intermediary Optical Switch (313) being attached to an Intermediary Router (304), and that satisfy the Switch Policy Rule.

3. The method of claim 1 or 2, further comprising the steps of:
- monitoring data flows nested in the L1/L0 flows; and, if the data flows are sensitive
- checking that security requirements for the data flows are compliant with the Switch Policy Rule.

4. The method of any of the claims 1 two 3 further comprising the steps of:
- detecting security threats affecting the Optical Links (320-328); and, if any is detected, and if any L1/L0 flow circulates on such an affected Optical Link
- requesting to the SDN Controller, for any such L1/L0 flow circulating on an affected Optical Link, a different L1/L0 flow that satisfies the Switch Policy Rule.

5. The method of any of the claims 1 to 4 further comprising the steps of:
- detecting security threats affecting the Optical Switches (310 -315); and, if any is detected, and if any L1/L0 flow circulates through such an affected Optical Switch
- requesting to the SDN Controller, for any such L1/L0 flow circulating through an affected Optical Switch, a different L1/L0 flow that satisfies the Switch Policy Rule.

6. The method of any of the claims 1 to 5 further comprising the step of signing and certifying the IP Policy Rule (10).

7. A system of translating and enforcing an IP Policy Rule (10) at optical switching level, in a software defined network equipped with a SDN controller, where such network comprises:
- an IP network on which may circulate L3/L2 flows, comprising a Source Router (300) and a Destination Router (301); and
- an optical network serving the IP network and comprising a plurality of Optical Switches (310 -315), of which a Source Optical Switch (310) attached to the Source Router (300), and a Destination Optical Switch (315) attached to the Destination Router (301), said Optical Switches being interconnected by a plurality of Optical Links (320 - 328) on which may circulate L1/L0 flows;
and where said IP Policy Rule (10) aggregates a set of policy conditions with a set of policy actions applying to an L3/L2 flow between the Source Router (300) and the destination Router (301);
said system comprising:
- an IP to Optic Policy Translator (11) configured to:
- receive the IP Policy Rule (10);
- translate the IP Policy Rule (10) into a Switch Policy Rule aggregating a set of policy conditions with a set of policy actions applying to L1/L0 flows between Optical Switches (310-315) ; and
- store the Switch Policy Rule into a Rule Database (14);
- an Optical Policy Enforcer (12) configured to:
- receive the Switch Policy Rule;
- test whether at least one L1/L0 flow is defined in a Network Topology Database (15) associated with the SDN controller, through the optical network that allows connecting the Source Optical Switch (310) and the Destination Optical Switch (315), and that satisfies the Switch Policy Rule; and, in the negative
- compute alternate L1/L0 flows through the optical network that allow connecting the Source Optical Switch (310) and the Destination Optical Switch (315), and that satisfy the Switch Policy Rule.

8. The system of claim 7 further comprising an Optical Network Policy Checker (13) configured to:
- monitor data flows nested in the L1/L0 flows; and, if the data flows are sensitive
- check that security requirements for the data flows are compliant with the Switch Policy Rule.

9. The system of claim 8 where the Optical Network Policy Checker (13) is further configured to:
- detect security threats affecting the Optical Links (320-328); and, if any is detected, and if any L1/L0 flow circulates on such an affected Optical Link
- request to the SDN Controller, for any such L1/L0 flow circulating on an affected Optical Link, a different L1/L0 flow that satisfies the Switch Policy Rule.

10. The system of claim 8 or 9, where the Optical Network Policy Checker (13) is further configured to:
- detect security threats affecting the Optical Switches (310 -315); and, if any is detected, and if any L1/L0 flow circulates through such an affected Optical Switch
- request to the SDN Controller, for any such L1/L0 flow circulating through an affected Optical Switch, a different L1/L0 flow that satisfies the Switch Policy Rule.
